# EUROPEAN PATENT SPECIFICATION

(11) **EP 2 544 513 B1**
(45) Date of publication and mention of the grant of the patent: **19.06.2019**
(21) Application number: 10796642.6
(22) Date of filing: 19.03.2010
(51) Int. Cl.: H05B 41/36, H05B 41/292, H05B 41/288

(54) **METHOD FOR CONTROLLING THE OUTPUT POWER OF A GAS DISCHARGE LAMP AND AN ELECTRONIC BALLAST**
VERFAHREN ZUR STEUERUNG DER AUSGANGSLEISTUNG EINER GASENTLADUNGSLAMPE UND ELEKTRONISCHES VORSCHALTGERÄT
PROCÉDÉ DE RÉGLAGE DE LA PUISSANCE DE SORTIE D'UNE LAMPE À DÉCHARGE DANS UN GAZ, ET BALLAST ÉLECTRONIQUE

(30) Priority: 09.07.2009 CN 200910040971
(43) Date of publication of application: 09.01.2013
(73) Proprietor: Zhang, Botao, Beijing 100028 (CN)
(72) Inventor: HU, Jun, Guangzhou Guangdong 510095 (CN)
(74) Representative: Gunzelmann, Rainer
(86) International application number: PCT/CN2010/000338
(87) International publication number: WO 2011/003265

(56) References cited:
- EP-A2- 1 309 228
- EP-A2- 1 406 475
- EP-A2- 1 418 795
- WO-A1-2006/016335
- WO-A2-2008/140916
- CN-A- 101 141 843
- CN-A- 101 478 850
- CN-A- 101 600 287
- US-A- 5 083 065
- US-A- 5 365 151
- US-A1- 2004 000 880
- US-A1- 2008 315 782

## Description

### FIELD OF THE INVENTION

The invention relates to the illumination field, in particular to a method for automatically controlling the output power of a gas discharge lamp and an electronic ballast.

### BACKGROUD OF THE INVENTION

Among the light-emitting radiation luminous sources, the gas discharge luminous source is the most widely applied one, which is manufactured according to the principle of gas discharge for light-emitting. The gas discharge lamp has many kinds, widely used are glow discharge and arc discharge. Gas discharge lamps can be classified into the following types: mercury vapor lamp, metal halide lamp, high-voltage mercury lamp, low-voltage sodium lamp and rare short-arc xenon lamp, hernia lamp. The hernia lamp is most used among the gas discharge lamps. The gas discharge lamp has following advantages: (1) the spectral emission may be alternated, by choosing suitable luminescent material, the spectral emission may be needed wavelength; several luminescent materials can also be used at the same time to obtain the optimal assemble spectrum; (2) high efficiency, the gas discharge lamp may transform 25-30% of the inputted electronic energy to luminous energy; (3) long service life, the service life may reach more than ten thousand or twenty thousand hours; (4) great quality to maintain the outputted luminous, there is still 60-80% of the luminous be outputted when the life span is expired. The gas discharge lamp is widely used in industry, agriculture, medical health and scientific research. Beside working as the luminous source, the gas discharge lamp also used in photography, projection, making a blueprint, photocopy, photolithography, chemical synthesis, plastic and ageing of rubber, fluorescence microscope, optics oscillograph, fluorescence analysis, ultraviolet detection, sterilization and disinfection, medical treatment, cultivation, and solid state laser etc.

The gas discharge lamp are composed of bubble shell, electrodes and discharge gas, with similar basic structures. Between the bubble shell and electrodes is sealed by vacuum hermetic. And the bubble shell is filled with the discharge gas. The gas discharge lamp can not be linked to circuits by alone, must be linked to circuits with the trigger and the ballast, then started and worked stability. The starting of the gas discharge lamp is generally enforced a voltage more than the voltage of the source power, sometimes over several kilovoltages to ten kilovoltages. The volt-ampere property curve of the arc discharge is usually a negative slope, that means, the voltage is decreasing with the increasing of the current. Under the constant power supply, to ensure the stability working of the luminous source, the circuit must be connected in series with a circuit element with positive resistance to balance the negative resistance and stabilize the working current. The element is called ballast or current restrictor. One example is US 5083065.

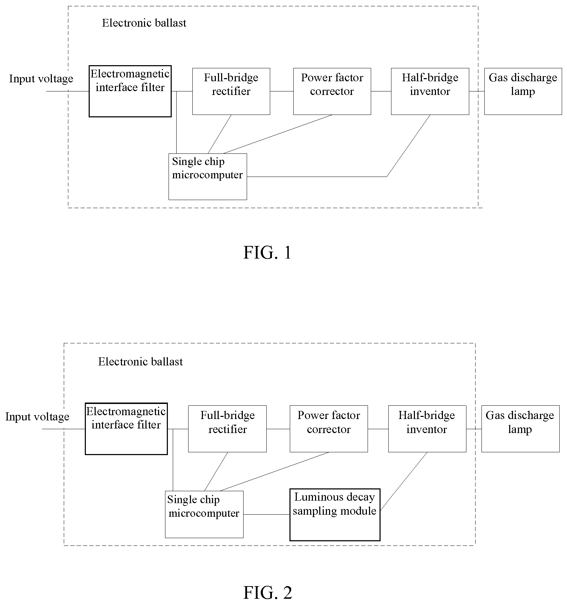

Figure 1 illustrates a structural view of an existing gas discharge lamp with electronic ballast. The gas discharge lamp comprises an electromagnetic interface (EMI) filter, a full-bridge rectifier, an active power factor corrector (APFC), a single chip microcomputer, a half-bridge inverter, and a fault detection system, wherein the EMI filter is used for preventing noises generated by the ballast from transmitting back to the power cord; the full-bridge rectifier is used for converting the alternating current into direct current; the APEC is used for controlling the AC circuit input current and voltage and generating the regulated DC bus voltage. The single chip microcomputer realizes control over the frequency regulation, the switching-on/off of the gas discharge lamp, constant power, and fault detection. The voltage applied onto the electrode of the gas discharge lamp is controlled by the half-bridge inverter and a CL resonant circuit. The output voltage can be better controlled by more precisely controlling the pulse-width modulation (PWM) signals of the half-bridge inverter. So, the control over the output power can be realized by better controlling the output voltage. A PWM module in the single chip microcomputer can provide higher or more accurate resolution ratio and has better control over linear frequency, in particular in the range of 30kHz∼120kHz. Thus, it can be ensured that enough pulse voltage is provided to ignite the gas discharge lamp and meanwhile, a table working current is provided at a stable state. Via programming software frequency jittering control technology, more precise frequency stepping amplitude and higher frequency resolution ratio can be realized. Thus, the output power of the digital electronic ballast can be better controlled by realizing the dynamic frequency jittering control so as to conduct the dim-lighting and energy-saving functions.

At present, regardless of whether the digital control type or analog control type light-emitting electronic ballast ignites the gas discharge lamp, regardless of whether a new luminous source or a luminous decay luminous source works, constant-power control technology is adopted, which means that the output power is consistent with the rated value. The gas discharge lamp has a working characteristic where the tube voltage increases when the luminous source starts to age, and the constant-power control principle of the electronic ballast is that the current in the lamp tube reduces when the voltage therein increases, so the output power of the lamp is also controlled to be in the rated range, for example: the voltage in the lamp tube is 100V, the current in the lamp tube is 4A, and the output power is 400W at this moment; when the voltage increases to 120V, then the current reduces to 3.34A, and the output power is still 400W. Therefore, this working principle is called constant-power working principle. After the gas discharge lamp undertakes luminous decay and is aged, the actual emitted light flux is greatly reduced. If the input is carried out at the rated power, the aging of the gas discharge lamp will be accelerated, and meanwhile the aged luminous sources still consumes the same electricity amount, which causes waste.

### SUMMARY OF THE INVENTION

To solve the problems of the prior art, the present invention provides a method for automatic control over the output power of a gas discharge lamp and the electronic ballast, which saves energy and prolongs the lifetime of the luminous source by automatic power control over the decline of the light flux caused by luminous decay of the gas discharge lamp.

To solve the above problems, the present invention provides a method for automatic control over the output power of a gas discharge lamp, which comprises
detecting the luminous decay variation of the gas discharge lamp;
matching a corresponding actual power value for the gas discharge lamp according to the detected luminous decay variation;
regulating the output power of the gas discharge lamp according to the matched actual power value.

Correspondingly, the present invention also provides electronic ballast, which comprises:
a luminous decay sampling module for detecting the luminous decay variation of a gas discharge lamp;
a single chip microcomputer for matching a corresponding actual power value for the gas discharge lamp according to the detected luminous decay variation;
a half-bridge inverter for regulating the output power of the gas discharge lamp according to the actual power value matched by the single chip microcomputer.

The present invention has the following advantages: the electronic ballast can automatically realize power regulation of the gas discharge lamp, and under the condition of luminous decay, the gas discharge lamp is not required to work at the rated power, thus saving energy; a hardware support is provided for realizing intelligent illumination and energy-conservation management; in the prior art, the early luminous decay and aging generated by the working characteristic and the working environment of the gas discharge lamp directly caused scrapping of the luminous source in advance, resource waste, and environmental pollution, however the present invention greatly prolongs the lifetime of the luminous source on the basis of energy conservation.

### BRIEF DESCRIPTION OF THE DRAWINGS

Figure 1 is a structural view of an existing gas discharge lamp with an electronic ballast.
Figure 2 is a structural view of a gas discharge lamp with the electronic ballast in the embodiment of the present invention.

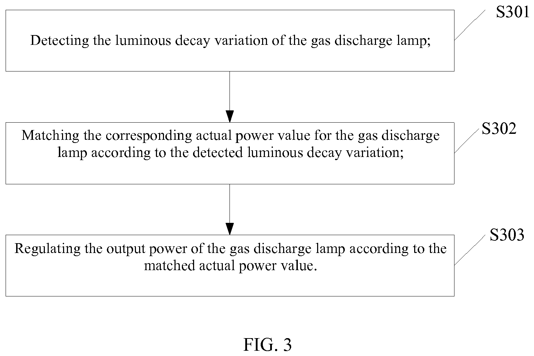

Figure 3 is a flowchart of a method for automatically controlling a gas discharge lamp in the embodiment of the present invention.

### DETAILED DESCRIPTION OF THE PERFERRED EMBODIMENTS

The following are clear and complete descriptions of the technical solutions in the embodiment of the present invention with reference to the attached drawings. Obviously, the following embodiments are only a part of the embodiments of the present invention. Based on the embodiments in the present invention, all other embodiments made by those skilled in this field without creative labor belong to the protection scope of the present invention.

The gas discharge lamp is very popular due to the advantages of high luminous efficiency, long service life, and good color rendering property. However, restricted by the existing technologies and influenced by the external and internal working environments, 100% gas discharge lamps are scrapped in advanced, which causes huge waste to the limited social resources and meanwhile expands environmental pollution. By the constant-power control method, the luminous efficiency is lower and lower and the more and more electric energy is consumed with the use of a gas discharge lamp. The present invention develops a high-performance digital luminous decay power control electronic ballast matched with the gas discharge lamp and solves the problems of resource waste and environmental pollution caused by the luminous source scrapping in advanced because of the early luminous decay and aging generated by the working characteristics and working environment of the gas discharge lamp, greatly prolonging the lifetime of the luminous source on the basis of great energy consumption, saving resources and meanwhile reducing environmental pollution.

Figure 2 illustrates a structural view of a gas discharge lamp with electronic ballast in the embodiment of the present invention, which comprises an EMI filter, a full-bridge rectifier, an active power factor corrector, a half-bridge inverter, a single chip microcomputer(MCU), a luminous decay sampling module, and a gas discharge lamp, wherein the luminous decay sampling module is mainly used for detecting the luminous decay variation of the gas discharge lamp; specifically, the luminous decay sampling module can detect the voltage variation of the gas discharge, the current variation of the gas discharge lamp, or the variation of the inverting voltage frequency of the gas discharge lamp.

The single chip microcomputer(MCU) is mainly used for matching a corresponding actual power value for the gas discharge lamp according to the detected luminous decay variation;

Specifically, the single chip microcomputer(MCU) reduces the output power of the gas discharge lamp in proportion according to the detected luminous decay variation and matches the corresponding actual power for the gas discharge lamp according to the output power. To reduce the output power of the gas discharge lamp in proportion, a proper proportion relation can be established according to the luminous decay variation such that the matched actual power is basically equivalent to the flux of light actually emitted from the gas discharge lamp.

Or, the single chip microcomputer(MCU) matches an actual power corresponding to the gas discharge lamp in a preset feature library according to the detected luminous decay variation, wherein the preset feature library stores the luminous decay variation and the corresponding actual power value of the gas discharge lamp corresponding to the luminous decay variation. The data in the preset feature library can be a series of data collected and calculated after sampling the features of the gas discharge lamp is completed, such as the actually emitted luminous flux on condition that the voltage of the gas discharge tube increases by 5 or 10V every time.

The half-bridge inverter is mainly used for adjusting the output power of the gas discharge lamp according to the corresponding actual power value matched by the single chip microcomputer (MCU).

Specifically, the half-bridge inverter can adjust the voltage and current output to the gas discharge lamp independently or simultaneously according to the matched actual power value.

The working frequency of the electronic ballast of the gas discharge lamp is generally 30KHz-120KHz. The lamp tube is usually started and triggered by a voltage (peak) of 500V∼6kV, and after the lamp tube works stably, its voltage (effective value) is in the range of 100V-200V (national standard). The lamp voltage and the amplitude of the frequency and signal output by the high-frequency half-bridge inverter of the electronic ballast are extremely unstable and change along with the heating of the lamp tube and devices. Usually, the effective value of the tube voltage detected by the regular peak-value detector and the average-value detector has a relatively large error, so the design of the sampling precision of luminous decay signal is very important and difficult for the present invention. By observing the working state of the gas discharge lamp, it is found that when the temperature of the working environment of the gas discharge lamp (high-voltage type) is higher than 100 degrees or the working temperature of the gas discharge lamp (low-voltage type) is higher than 80 degrees, the luminous decay phenomenon occurs, and at this time the voltage and current of the lamp tube both change, which means that the voltage increases and the current reduces. Thus, the luminous efficiency declines. There are three causes leading to luminous decay in advance: First, increasing of the temperature of the working environment; second, decreasing of the emitting ability of the electrodes; and third, working with ultra high power for long time. In the process of implementing the present invention, the output power of the gas discharge lamp is controlled to be corresponding to the light flux of the luminous source during decay by detecting the variation of the voltage and current of the lamp tube according to the features of the gas discharge lamp in the process of luminous decay, thus fulfilling the aim of saving energy and prolonging the lifetime of the luminous source.

In the process of implementing the embodiments of the present invention, the tube voltage output by the half-bridge inverter increases correspondingly and the tube current reduces when the luminous source starts to decay, so the luminous decay signal of the gas discharge lamp is sampled by the luminous decay sampling module. When the tube voltage of the gas discharge lamp changes, the external luminous decay sampling module outputs the changed tube voltage (change range: 110V-160V for the high-voltage type or 160V-200V for the low-voltage type) which is outputted by the half-bridge inverter and sampled by a voltage sensor in the module from an isolation transformer first; the voltage is rectified by a diode into a DC voltage signal; the DC voltage signal is input to a measuring IC; the measuring IC converts the disorderly luminous decay voltage signal of the lamp tube into a corresponding effective DC voltage signal and then outputs the effective DC voltage signal; the signal output from the measuring IC is amplified by two reverse proportional amplifiers and then input to an analogue-to-digital (A/D) converter of the MCU; and then the variation of the tube voltage and tube current during the luminous decay of the luminous source is measured by the A/D converter in the single chip microcomputer (MCU). The sampled luminous decay DC voltage is converted by the A/D converter and then fed to an analog comparator module in the MCU to be compared with the reference tube voltage of the programmable comparator (taking the 110V as an example for description), and this signal is amplified and input to the high-frequency isolation transformer for pulse-driving the half-bridge inverter. The change of the lamp power is mainly determined by the output voltage Vof of the half-bridge inverter and the fed value of the output current Iof, namely P_{L}=Vof×Iof; when the tube voltage V exceeds the upper limit 100V of the reference voltage, the MCU may change the frequency of the grid tube driving the switch of the half-bridge converter, then the outputted current will be reduced, and the power of the lamp will decline in proportion. The tube voltage increases every time the luminous decay occurs. To ensure that the tube voltage basically corresponds to the variation of the luminous flux, the tube voltage and the power shall change in proportion, for example: every time when the tube voltage increases by 10V, the power shall automatically decline by 5W-20W (to control the high-voltage gas discharge lamp). When the tube voltage increases to 160V, the power declines by 30W-120W. When the tube voltage exceeds 160V, the protection circuit may close the half-bridge inverter to output. Or when the tube voltage increases by 50V-10V and the power declines by 1W-2W(to control the low-voltage gas discharge lamp). Thus, the power declines in proportion when the luminous flux reduces during the luminous decay of the luminous source, and then the automatic closed-loop control over the luminous decay power is realized.

Of course, in this embodiment, the control over the output power of the gas discharge lamp can also be realized by detecting the current variation of the gas discharge lamp and the frequency variation of the inverting voltage in cases of luminous decay.

Correspondingly, the present invention also provides a method for automatically controlling the output power of the discharge lamp in the embodiment. The method comprises the following steps:
S301: detecting the luminous decay variation of the gas discharge lamp;
specifically, detecting the voltage variation of the gas discharge lamp; or
detecting the current variation of the gas discharge lamp; or
detecting the variation of the frequency variation of the inverting voltage of the gas discharge lamp.

It should be stated that when the luminous decay variation reaches a certain degree, the power of the gas discharge lamp is not required to be adjusted, and the power supply to the gas discharge lamp is stopped because the gas discharge lamp is already at the scrapped state and cannot provide normal illumination for users.
S302: setting a corresponding actual power value for the gas discharge lamp according to the detected luminous decay variation;
specifically, reducing the output power of the gas discharge lamp in proportion according to the detected luminous decay variation and matching the corresponding actual power for the gas discharge lamp according to the output power; wherein to reduce the output power of the gas discharge lamp in proportion, a proper proportion relation can be established according to the luminous decay variation such that the matched actual output power is basically equivalent to the flux of luminous actually emitted from the gas discharge lamp;
or matching the corresponding actual power for the gas discharge lamp in a preset feature library according to the detected luminous decay variation, wherein the preset feature library stores the luminous decay variation and the corresponding actual power value of the gas discharge lamp corresponding to the luminous decay variation. The data in the preset feature library can be a series of data collected and calculated after sampling the features of the gas discharge lamp is completed, such as the actually emitted luminous flux of the gas discharge lamp on condition that the voltage of the gas discharge tube increases by 5 or 10V every time.
S303: regulating the output power of the gas discharge lamp according to the matched actual power value;
specifically, regulating the input voltage and/or input current of the gas discharge lamp according to the matched actual power value.

The gas discharge lamp has a working characteristic that the tube voltage thereof increases gradually in the rear stage of the lifetime. In such cases, the inductive ballast in the traditional inductive ballast circuit has a characteristic of constant-current output, which means that the current of the lamp changes little, so the power of the lamp increases and accelerates the aging of the luminous source, which further increases the tube voltage. Finally, such circulation causes a quick cessation of the luminous source. If the digital luminous decay power control electronic ballast is used, when the tube voltage of the gas discharge lamp increases, the tube current declines and the power of lamp also declines, so the gas discharge lamp has a longer lifetime, and meanwhile the energy-conservation and environmental protection are realized.

## Claims

1. A method for automatically controlling the output power of a gas discharge lamp, comprising:
detecting, in a discharge stable state of the gas discharge lamp, the luminous decay variation of the gas discharge lamp, wherein the luminous decay variation causes a decline of the light flux of the gas discharge lamp;
matching a corresponding actual power value for the gas discharge lamp according to the detected luminous decay variation; and
regulating the output power of the gas discharge lamp according to the matched actual power value,
**characterised in that** the regulated output power is less than the rated power of the gas discharge lamp; and
wherein the gas discharge lamp is a high-intensity discharge, HID, lamp.

2. The method according to claim 1, wherein detecting the luminous decay variation of the gas discharge lamp comprises:
detecting the voltage variation of the gas discharge lamp; or
detecting the current variation of the gas discharge lamp; or
detecting the variation of the frequency variation of the inverted voltage of the gas discharge lamp.

3. The method according to claim 2, wherein matching a corresponding actual power value for the gas discharge lamp according to the detected luminous decay variation comprises:
reducing the output power of the gas discharge lamp in proportion according to the detected luminous decay variation and matching the corresponding actual power value for the gas discharge lamp according to the output power.

4. The method according to claim 2, wherein matching a corresponding actual power value for the gas discharge lamp according to the detected luminous decay variation comprises:
matching the corresponding actual power value for the gas discharge lamp in a preset feature library according to the detected luminous decay variation, wherein the preset feature library stores the luminous decay variation and the actual power value of the gas discharge lamp corresponding to the luminous decay variation.

5. The method according to any one of claims 1 to 4, wherein regulating the output power of the gas discharge lamp according to the matched actual power value comprises:
regulating the input voltage and/or input current of the gas discharge lamp according to the matched actual power value.

6. An electronic ballast, comprising:
a luminous decay sampling module for detecting the luminous decay variation of a gas discharge lamp in a discharge stable state of the gas discharge lamp, wherein the luminous decay variation causes a decline of the light flux of the gas discharge lamp;
a single chip microcomputer for matching a corresponding actual power value for the gas discharge lamp according to the detected luminous decay variation; and
a half-bridge inverter for regulating the output power of the gas discharge lamp according to the actual power value matched by the single chip microcomputer,
**characterised in that** the regulated output power is less than the rated power of the gas discharge lamp,
wherein the gas discharge lamp is a high-intensity discharge, HID, lamp.

7. The electronic ballast according to claim 6, wherein the luminous decay sampling module is used for detecting the voltage variation, current variation, or variation of frequency variation of the inverting voltage of the gas discharge lamp.

8. The electronic ballast according to claim 7, wherein the single chip microcomputer is used for reducing the output power of the gas discharge lamp in proportion according to the detected luminous decay variation and matching the corresponding actual power value for the gas discharge lamp according to the output power.

9. The electronic ballast according to claim 7, wherein the single chip microcomputer is used for matching the corresponding actual power value for the gas discharge lamp in a preset feature library according to the detected luminous decay variation, wherein the preset feature library stores the luminous decay variation and the actual power value of the gas discharge lamp corresponding to the luminous decay variation.

## Patentansprüche

1. Verfahren zur automatischen Steuerung der Ausgangsleistung der Gasentladungslampe, umfassend:
Ermitteln der Leuchtdämpfungsänderung der Gasentladungslampe im stabilen Entladungszustand der Gasentladungslampe, wobei das Abklingen des Lichtstroms der Gasentladungslampe durch die Leuchtdämpfungsänderung hervorgerufen wird;
Anpassen des entsprechenden tatsächlichen Leistungswerts nach der ermittelten Leuchtdämpfungsänderung an die Gasentladungslampe; und
Regulierung der Ausgangsleistung der Gasentladungslampe nach dem angepassten tatsächlichen Leistungswert,
**dadurch gekennzeichnet, dass**
die regulierte Ausgangsleistung geringer als die Sollleistung der Gasentladungslampe ist; und
wobei die Gasentladungslampe eine Hochdruckentladungslampe (HID-Lampe) ist.

2. Verfahren nach Anspruch 1, **dadurch gekennzeichnet, dass** das Ermitteln der Leuchtdämpfungsänderung der Gasentladungslampe umfasst:
das Ermitteln der Spannungsänderung der Gasentladungslampe; oder das Ermitteln der Stromänderung der Gasentladungslampe; oder das Ermitteln der Veränderung der Frequenzänderung der invertierten Spannung der Gasentladungslampe.

3. Verfahren nach Anspruch 2, **dadurch gekennzeichnet, dass** das Anpassen des entsprechenden tatsächlichen Leistungswerts nach der ermittelten Leuchtdämpfungsänderung an die Gasentladungslampe umfasst:
Reduzieren der Ausgangsleistung der Gasentladungslampe verhältnismäßig nach der ermittelten Leuchtdämpfungsänderung und Anpassen des entsprechenden tatsächlichen Leistungswerts an die Gasentladungslampe nach der Ausgangsleistung.

4. Verfahren nach Anspruch 2, **dadurch gekennzeichnet, dass** Anpassen des entsprechenden tatsächlichen Leistungswerts an die Gasentladungslampe nach der ermittelten Leuchtdämpfungsänderung umfasst:
Anpassen der entsprechenden tatsächlichen Leistungswerts an die Gasentladungslampe in vorgegebener Datenbank der Merkmale nach der ermittelten Leuchtdämpfungsänderung, wobei die vorgegebener Datenbank der Merkmale zur Abspeicherung der Leuchtdämpfungsänderung und des tatsächlichen Leistungswerts der Gasentladungslampe nach der Leuchtdämpfungsänderung verwendet ist.

5. Verfahren nach einem der Ansprüche 1 bis 4, **dadurch gekennzeichnet, dass** die Regulierung der Ausgangsleistung der Gasentladungslampe nach dem angepassten tatsächlichen Leistungswert umfasst:
Regulierung der Eingangsspannung und/oder Eingangsstrom der Gasentladungslampe nach dem angepassten tatsächlichen Leistungswert.

6. Elektronisches Vorschaltgerät, umfassend:
ein Probeentnahmemodul der Leuchtdämpfung zur Ermittlung der Leuchtdämpfungsänderung der Gasentladungslampe im stabilen Entladungszustand der Gasentladungslampe, wobei das Abklingen des Lichtstroms der Gasentladungslampe durch die Leuchtdämpfungsänderung hervorgerufen wird;
ein Ein-Chip-Mikrocomputer zur Anpassung des entsprechenden tatsächlichen Leistungswerts an die Gasentladungslampe nach der ermittelten Leuchtdämpfungsänderung;
und ein Halbbrückenwechselrichter zur Regulierung der Ausgangsleistung der Gasentladungslampe nach dem durch den Ein-Chip-Mikrocomputer angepassten tatsächlichen Leistungswert,
**dadurch gekennzeichnet, dass**
die regulierten Ausgangsleistung geringer als die Sollleistung der Gasentladungslampe ist, wobei die Gasentladungslampe eine Hochdruckentladungslampe (HID-Lampe) ist.

7. Elektronisches Vorschaltgerät nach Anspruch 6, **dadurch gekennzeichnet, dass** das Probeentnahmemodul zur Ermittlung der Spannungsänderung, Stromänderung, oder Veränderung der Frequenzänderung der invertierten Spannung der Gasentladungslampe verwendet ist.

8. Elektronisches Vorschaltgerät nach Anspruch 7, **dadurch gekennzeichnet, dass** der Ein-Chip-Mikrocomputer zur Reduzierung der Ausgangsleistung der Gasentladungslampe verhältnismäßig nach der ermittelten Leuchtdämpfungsänderung und zum Anpassen des entsprechenden tatsächlichen Leistungswerts an die Gasentladungslampe nach der Ausgangsleistung verwendet ist.

9. Elektronisches Vorschaltgerät nach Anspruch 7, **dadurch gekennzeichnet, dass** der Ein-Chip-Mikrocomputer zur Anpassung des entsprechenden tatsächlichen Leistungswerts an die Gasentladungslampe in vorgegebener Datenbank der Merkmale nach der ermittelten Leuchtdämpfungsänderung verwendet ist, wobei die vorgegebener Datenbank der Merkmale zur Abspeicherung der Leuchtdämpfungsänderung und des tatsächlichen Leistungswerts der Gasentladungslampe nach der Leuchtdämpfungsänderung verwendet ist.

## Revendications

1. Un procédé de contrôle automatique de la puissance de sortie d'une lampe à décharge gazeuse comprenant :
détecter une variation décroissante lumineuse de la lampe à décharge gazeuse à son état stable de décharge, dans lequel la variation décroissante lumineuse provoque une diminution du flux lumineux de la lampe à décharge gazeuse ;
adapter une valeur de puissance réelle correspondante pour la lampe à décharge gazeuse en fonction de la variation décroissante lumineuse détectée ; et
réguler la puissance de sortie de la lampe à décharge gazeuse en fonction de la valeur de puissance réelle correspondante,
**caractérisé en ce que** la puissance de sortie après la régulation est inférieure à la puissance nominale de la lampe à décharge gazeuse ;
et dans lequel la lampe à décharge gazeuse est une lampe à décharge à haute intensité (HID).

2. Procédé selon la revendication 1, dans lequel ladite détection de la variation décroissante lumineuse de la lampe à décharge gazeuse comprend :
détecter une variation de tension de la lampe à décharge gazeuse ;
détecter une variation de courant de la lampe à décharge gazeuse ; ou
détecter une variation de fréquence de la tension inverse de la lampe à décharge gazeuse.

3. Procédé selon la revendication 2, dans lequel l'adaptation de la valeur de puissance réelle correspondante pour la lampe à décharge gazeuse en fonction de la variation décroissante lumineuse détectée comprend :
réduire la puissance de sortie de la lampe à décharge gazeuse à proportion en fonction de la variation décroissante lumineuse détectée et adapter la valeur de puissance réelle correspondante pour la lampe à décharge gazeuse en fonction de la puissance de sortie :

4. Procédé selon la revendication 2, dans lequel l'adaptation de la valeur de puissance réelle correspondante pour la lampe à décharge gazeuse en fonction de la variation décroissante lumineuse détectée comprend :
rechercher la valeur de puissance réelle correspondante pour la lampe à décharge gazeuse dans une base de propriétés prédéfinie en fonction de la variation décroissante lumineuse détectée, dans lequel la base de propriétés prédéfinie sauvegarde la variation décroissante lumineuse et la valeur de puissance réelle de la lampe à décharge gazeuse correspondant à la variation décroissante lumineuse.

5. Procédé selon l'une des revendications 1 à 4, dans lequel la régulation de la puissance de sortie de la lampe à décharge gazeuse en fonction de la valeur de puissance réelle correspondante comprend :
réguler la puissance de sortie de la lampe à décharge gazeuse en fonction de la valeur de puissance réelle correspondante,

6. Un ballast électronique comprenant :
un module d'échantillonnage de décroissance lumineuse pour détecter une variation décroissante lumineuse de la lampe à décharge gazeuse à son état stable de décharge,
dans lequel la variation décroissante lumineuse provoque une diminution du flux lumineux de la lampe à décharge gazeuse ;
un micro-ordinateur à mono-puce pour rechercher une valeur de puissance réelle correspondante pour la lampe à décharge gazeuse en fonction de la variation décroissante lumineuse détectée ; et
un inverseur à demi-pont pour réguler la puissance de sortie de la lampe à décharge gazeuse en fonction de la valeur de puissance réelle recherchée par le micro-ordinateur à mono-puce,
**caractérisé en ce que** la puissance de sortie régulée est inférieure à la puissance nominale de la lampe à décharge gazeuse,
dans lequel la lampe à décharge gazeuse est une lampe à décharge à haute intensité (HID).

7. Ballast électronique selon la revendication 6, dans lequel le module d'échantillonnage de décroissance lumineuse est utilisé pour détecter la variation de tension, la variation de courant ou la variation de fréquence de la tension inverse de la lampe à décharge gazeuse.

8. Ballast électronique selon la revendication 7, dans lequel le micro-ordinateur à mono-puce est utilisé pour réduire la puissance de sortie de la lampe à décharge gazeuse à proportion en fonction de la variation décroissante lumineuse détectée et adapter la valeur de puissance réelle correspondante pour la lampe à décharge gazeuse en fonction de la puissance de sortie.

9. Ballast électronique selon la revendication 7, dans lequel le micro-ordinateur à mono-puce est utilisé pour rechercher la valeur de puissance réelle correspondante pour la lampe à décharge gazeuse dans une base de propriétés prédéfinie en fonction de la variation décroissante lumineuse détectée, dans lequel la base de propriétés prédéfinie sauvegarde la variation décroissante lumineuse et la valeur de puissance réelle de la lampe à décharge gazeuse correspondant à la variation décroissante lumineuse.
